# EUROPÄISCHE PATENTSCHRIFT

(11) **EP 1 047 584 B1**
(45) Veröffentlichungstag und Bekanntmachung des Hinweises auf die Patenterteilung: **15.03.2006**
(21) Anmeldenummer: 99923377.8
(22) Anmeldetag: 23.03.1999
(51) Int. Cl.: B60T 7/04

(54) **PEDALWEGSIMULATOR**
PEDAL TRAVEL SIMULATOR
SIMULATEUR DE COURSE DE PEDALE

(30) Priorität: 21.08.1998 DE 19838037
(43) Veröffentlichungstag der Anmeldung: 02.11.2000
(73) Patentinhaber: ROBERT BOSCH GMBH, 70442 Stuttgart (DE)
(72) Erfinder: KOEPFF, Georg, D-71665 Vaihingen (DE)
(86) Internationale Anmeldenummer: PCT/DE1999/000830
(87) Internationale Veröffentlichungsnummer: WO 2000/010848

(56) Entgegenhaltungen:
- DE-A- 19 651 153
- DE-A- 19 724 387
- DE-A- 19 748 182
- "MAGNETORHEOLOGICAL FLUID EMULATOR" RESEARCH DISCLOSURE, Nr. 397, 1. Mai 1997 (1997-05-01), Seite 340 XP000726459 ISSN: 0374-4353

## Beschreibung

### Stand der Technik

Die Erfindung betrifft einen Pedalwegsimulator nach dem Oberbegriff des Anspruchs 1.

Derartige Pedalwegsimulatoren kommen insbesondere bei elektromotorischen Bremsen, wie sie beispielsweise aus der US 4 658 939 hervorgehen, zum Einsatz. Die Änderung der Pedalstellung wird dabei in ein elektrisches Signal umgewandelt, welches einer Steuereinrichtung zugeführt wird, die ihrerseits Radbremsen ansteuert.

Zweck derartiger Pedalwegsimulatoren ist es, dem Fahrer ein Pedalgefühl zu vermitteln, das demjenigen herkömmlicher hydraulischer Bremsen mit Unterdruckbremskraftverstärkern und Hauptbremszylindern weitestgehend entspricht.

Aus der DE 43 24 041 A1 geht beispielsweise ein Sollwertgeber zur Steuerung einer Bremsanlage hervor mit einem Wegsimulator, der einen Kolben in einem Zylinder umfaßt. Der Kolben steht einerseits unter der Wirkung einer Feder, andererseits ist er von einem vorgespannten Gaspolster belastet. In der Ruhestellung des Kolbens wirkt die Feder als Druckfeder. Bei Betätigung des Sollwertgebers wird im Zuge der Verschiebung des Kolbens gegen die Druckkraft des Gaspolsters die Feder als Zugfeder wirksam. Die Resultierende aus Federkraft und Druckkraft hat eine ausgeprägte Progressivität der Kennlinie des Wegsimulators zur Folge. Durch Meßumformer wird das Wegesignal und/oder Drucksignal in ein elektrisches Signal zur Ansteuerung einer Bremsanlage umgewandelt.

Die Erzielung einer charakteristischen Pedalweg-Pedalkraft-Charakteristik bereitet nun mit konventionellen Federelementen nicht selten große Probleme.

Der Erfindung liegt daher die Aufgabe zugrunde, einen Pedalwegsimulator zu vermitteln, der auf technisch einfach zu realisierende Weise komplizierte progressive Pedalweg-Pedalkraft-Charakteristiken, wie sie bei Kraftfahrzeugen gefordert werden, nachzubilden im Stande ist.

### Vorteile der Erfindung

Diese Aufgabe wird bei einem Pedalwegsimulator der eingangs beschriebenen Art erfindungsgemäß durch die Merkmale des Anspruchs 1 gelöst und hat den Vorteil, daß die Ausbildung des Rückstellmittels mit wenigstens zwei Magneten, deren sich gegenseitig abstoßende Pole einander zugewandt angeordnet sind und deren einer mit dem Pedal verbunden und in Richtung der Resultierenden abstoßenden magnetischen Kraft verschieblich geführt ist, die komplizierte progressive Pedalcharakteristik relativ einfach nachgebildet werden kann.

Von besonderem Vorteil hierbei ist es, daß durch die Ausbildung des Rückstellmittels aus zwei Magneten, deren einer als Anker und der andere als Ankergegenstück anzusehen ist, praktisch jede beliebige Kennlinie realisiert werden kann.

Vorteilhaft ist es auch, daß eine derartige Ausführung des Pedalwegsimulators eine sehr kompakte Bauweise ermöglicht. Darüber hinaus ist keine Durchdringung der Stirnwand im Pedalraum des Fahrzeugs erforderlich.

Die Magnete können auf die unterschiedlichste Art und Weise ausgebildet sein. Eine vorteilhafte Ausführungsform sieht vor, daß die Magnete ferromagnetische Dauermagnete sind.

Eine besonders vorteilhafte Ausführungsform sieht dabei vor, daß diese Dauermagnete magnetische Scheiben sind, die jeweils in einem auf sie angepaßten Topf aus einem weichmagnetischen Werkstoff angeordnet sind. Eine solche Ausführungsform ist einfach herzustellen und ermöglicht praktisch jede beliebige Form der Töpfe und damit jede beliebige Form von Anker und Ankergegenstück.

Vorzugsweise ist dabei vorgesehen, daß zwischen dem Topf und der magnetischen Scheibe eine nicht magnetische Hülse angeordnet ist.

Zur Erzeugung einer gewünschten Pedalcharakteristik ist vorteilhafterweise vorgesehen, daß die Kennlinie der abstoßenden magnetischen Kraft in Abhängigkeit von dem Pedalweg durch eine Formgebung der Magnete veränderbar ist. Es hat sich gezeigt, daß durch Veränderung der Form der beiden Magnete unterschiedlichste Kraft-Weg-Kennlinien realisierbar sind, beispielsweise ist eine mit zunehmendem Weg zunehmende magnetische Kraft realisierbar, es ist aber auch eine mit zunehmendem Weg zunächst zunehmende, dann abfallende und wieder ansteigende Kraft realisierbar, ähnlich den Kennlinien, wie sie bei Schaltmagneten bekannt sind.

Eine besonders vorteilhafte Ausführungsform sieht vor, daß der dem Pedal abgewandte Topf eine kegelförmige Gestalt mit sich auf der dem Pedal abgewandten Seite öffnendem Kegelwinkel aufweist. Hierdurch wird eine Kraft-Weg-Kennlinie erzielt, die der eines an sich bekannten Pedals sehr ähnlich ist. Durch Ändern des Kegelwinkels kann die Kraft-Weg-Kennlinie geändert und festgelegt-werden.

Der mit dem Pedal verschiebliche Magnet ist durch eine gleitgelagerte Führungsstange geführt.

Insbesondere im Hinblick auf eine vorteilhafte zusätzliche Führung dann, wenn sich die beiden sich abstoßenden magnetischen Pole sehr nahe aufeinanderzubewegen, d.h. bei stark durchgetretenem Pedal, ist vorgesehen, daß der dem Pedal abgewandte Topf den dem Pedal zugewandten Topf im durchgetretenen Zustand des Pedals wenigstens teilweise umschließt.

Bei einer anderen Ausführungsform sind die Magnete vorteilhafterweise Elektromagnete, deren Feldstärke durch die Stromstärke beeinflußbar ist.

Zur Weiterleitung der Pedalstellung an eine Steuereinheit oder dergleichen ist vorgesehen, daß an einem die Magneten aufnehmenden Gehäuse Sensoren zur Erfassung der Pedalstellung vorgesehen sind.

### Zeichnung

Weitere Merkmale und Vorteile der Erfindung sind Gegenstand der nachfolgenden Beschreibung sowie der zeichnerischen Darstellung eines Ausführungsbeispiels der Erfindung.

In der Zeichnung zeigen:
- Fig. 1: schematisch eine Ausführungsform eines von der Erfindung Gebrauch machenden Pedalwegsimulator;
- Fig. 2: schematisch die Pedalcharakteristik verschiedener Pedalwegsimulatoren;
- Fig. 3: eine weitere Ausführungsform eines erfindungsgemäßen Pedalwegsimulators und
- Fig. 4: die Kraft-Weg-Kennlinie des in Fig. 3 dargestellten Pedalwegsimulators.

### Beschreibung der Ausführungsbeispiele

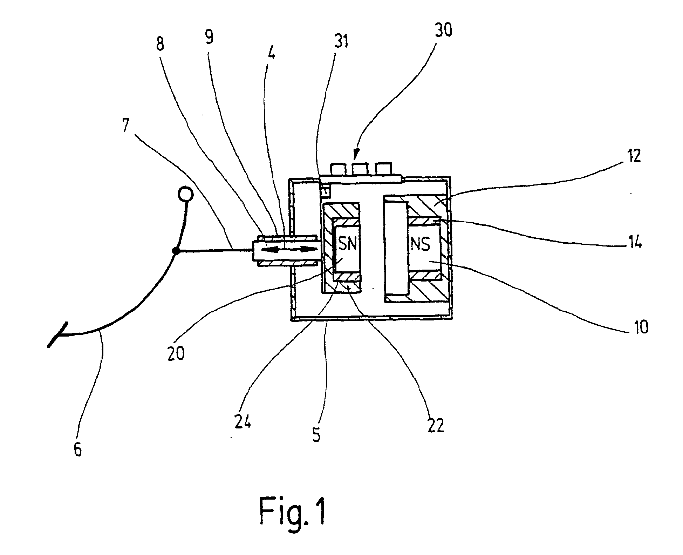

Ein Pedalwegsimulator, dargestellt in Fig. 1, umfaßt ein Gehäuse 5, in dem ein erster Magnet 10, beispielsweise wie dargestellt, ein Dauermagnet, der scheibenförmig ausgebildet, und von einer nicht ferromagnetischen Hülse 14 umschlossen in einem Topf 12 angeordnet ist, befestigt ist. Diesem Magneten 10 zugewandt ist ein weiterer Magnet 20, beispielsweise ebenfalls ein Dauermagnet, derart, daß sich die beiden abstoßenden Pole, in Fig. 1 die Nordpole, einander zugewandt sind. Der zweite Magnet 20 ist ebenfalls über eine nicht ferromagnetische Hülse 24 in einem Topf 20 angeordnet.

Wie insbesondere aus Fig. 1 hervorgeht ist zur Erzielung einer besonders guten Führung vorgesehen, daß der dem Pedal 6 abgewandte Topf 12 im durchgetretenen Zustand des Pedals 6 den dem Pedal 6 zugewandten Topf 22 wenigstens teilweise umschließt.

Der zweite Magnet 20 ist mit einem Pedal 6 über eine Pedalstange 7, eine Führungsstange 8, die in einer Führung 9 gleitverschieblich gelagert ist, verbunden. Eine Betätigung des Pedals 6 bewirkt auf diese Weise eine Verschiebung des Magneten 20 entlang seiner die beiden magnetischen Pole verbindenden Achse.

Ein Betätigen des Pedals 6 bewirkt eine Verschiebung des Magneten 20 in Axialrichtung der Führungsstange 8, wie es schematisch durch den Doppelpfeil 4 dargestellt ist. Ein Durchtreten des Pedals 6 führt auf diese Weise dazu, daß sich der mit dem Pedal 6 gekoppelte Magnet 20 auf den fest in dem Gehäuse 5 angeordneten Magneten 10 zubewegt. Da nun die abstoßenden Pole der beiden Magneten einander zugewandt sind, führt eine Verringerung des Abstands der beiden Magnete 10, 20 zu einer progressiv zunehmenden abstoßenden Kraft und damit zu einer progressiv zunehmenden Betätigungskraft Fₚ des Pedals 6.

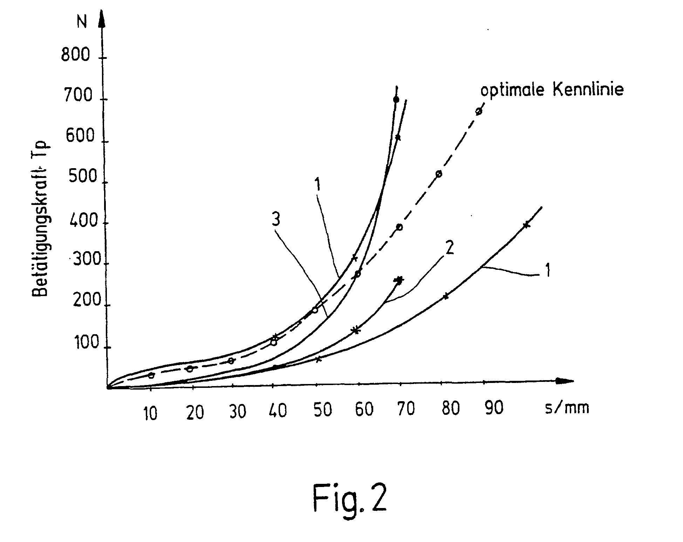

Die Pedalcharakteristik, d.h, die Betätigungskraft Fₚ in Abhängigkeit von dem Betätigungsweg s eines oben in Verbindung mit Fig. 1 beschriebenen Pedalwegsimulators ist schematisch in Fig. 2 dargestellt. Die mit 2 dargestellte Kurve entspricht dabei der Pedalkraft-Pedalweg-Charakteristik bei einer Verwendung von Bariumferritmagneten. Die mit 3 dargestellte Kurve entspricht der Pedalkraft-Pedalweg-Charakteristik mit Samarium-Cobaltmagneten. Die mit 1 bezeichneten Kurven stellen die Toleranzgrenzen dar, die bei Pedalcharakteristiken für Kraftfahrzeuge vorgesehen sind. Ferner ist ein als "optimale Kennlinie" bezeichnetes Pedalkraft-Pedalweg-Verhalten dargestellt.

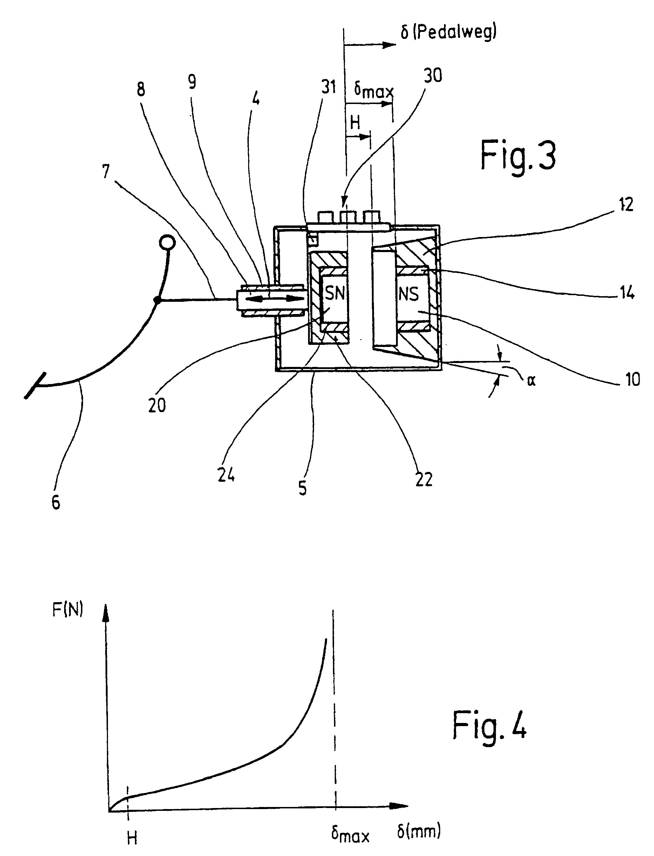

Bei einer weiteren Ausführungsform eines Pedalwegsimulators, dargestellt in Fig. 3, sind diejenigen Elemente, die mit denen des ersten, in Fig. 1 dargestellten, identisch sind, mit denselben Bezugszeichen versehen, so daß bezüglich deren Beschreibung auf die Ausführungen zum ersten Ausführungsbeispiel vollinhaltlich Bezug genommen wird.

Im Gegensatz zu dem in Fig. 1 dargestellten ersten Ausführungsbeispiel weist bei dem in Fig. 3 dargestellten zweiten Ausführungsbeispiel der im Pedal 6 abgewandte Topf 12 eine kegelige Gestalt mit einem Kegelwinkel α auf, der sich auf der dem Pedal 6 abgewandten Seite öffnet. Durch den in Fig. 3 dargestellten Pedalwegsimulator wird die in Fig. 2 dargestellte Pedalcharakteristik am besten erreicht, da im Vergleich zu auf der dem Pedal abgewandten Seite nicht kegelig ausgebildeten Töpfen eine Verlagerung der Magnetarbeit hin zu größeren Pedalwegen ermöglicht wird.

Die Kennlinie dieses Pedalwegsimulators ist schematisch in Fig. 4 dargestellt. Wie aus Fig. 4 hervorgeht, nimmt die Betätigungskraft mit zunehmendem Pedalweg δ zu, wobei die Kennlinie einen Verlauf aufweist, der dem Kraft-Weg-Verlauf eines an sich bekannten Pedals ähnlich ist. Am Anfang des Pedalhubs ergibt sich eine leichte Krafterhöhung zu einem Pedalweg H. Hieran schließt sich ein schwach progressiver Verlauf der Pedalkraft-Weg-Kennlinie an, der in der zweiten Hälfte des gesamten Pedalwegs stark progressiv verläuft.

Zur Erfassung der Stellung des Pedals 6 können beispielsweise drei redundante Pedalsensoren 30 an dem Gehäuse 5 vorgesehen sein, wobei diese Pedalsensoren 30 von einem mit dem beweglichen Magneten 10 gekoppelten Initiator 31 steuerbar sind. Überfährt der Initiator 31 die Pedalsensoren 30, beispielsweise die drei Sensoren, wie in Fig. 1 dargestellt, läßt sich hieraus eine Stellung des Pedals auf einfache Weise in ein elektrisches Signal umwandeln.

## Patentansprüche

1. Pedalwegsimulator, insbesondere Bremspedalwegsimulator, mit einem Rückstellmittel, welches auf ein Pedal (6) eine Rückstellkraft mit progressiver Kraft-Weg-Kennlinie ausübt, **dadurch gekennzeichnet, daß** das Rückstellmittel wenigstens zwei Magnete (10, 20) umfaßt, deren sich gegenseitig abstoßende Pole zueinander zugewandt angeordnet sind, und deren einer mit dem Pedal (6) verbunden und in Richtung der resultierenden abstoßenden magnetischen Kraft verschieblich geführt ist.

2. Pedalwegsimulator nach Anspruch 1, **dadurch gekennzeichnet, daß** die Magnete (10, 20) ferromagnetische Dauermagnete sind.

3. Pedalwegsimulator nach Anspruch 2, **dadurch gekennzeichnet, daß** die Dauermagnete magnetische Scheiben sind, die jeweils in einem Topf (12, 22) aus einem weichmagnetischen Werkstoff angeordnet sind.

4. Pedalwegsimulator nach Anspruch 3, **dadurch gekennzeichnet, daß** zwischen dem Topf (12, 22) und den magnetischen Scheiben (10, 20) jeweils eine nicht magnetische Hülse (14, 24) angeordnet ist.

5. Pedalwegsimulator nach einem der Ansprüche 3 oder 4, **dadurch gekennzeichnet, daß** die Kennlinie der abstoßenden magnetischen Kraft in Abhängigkeit von dem Pedalweg durch eine Formgebung der Töpfe veränderbar ist.

6. Pedalwegsimulator nach einem der Ansprüche 3 bis 5, **dadurch gekennzeichnet, daß** der dem Pedal abgewandte Topf eine kegelförmige Gestalt mit sich auf der dem Pedal abgewandten. Seite öffnendem Kegelwinkel (α) aufweist.

7. Pedalwegsimulator nach einem der Ansprüche 3 bis 6, **dadurch gekennzeichnet, daß** der dem Pedal (6) abgewandte Topf (12) den dem Pedal (6) zugewandten Topf (22) im durchgetretenen Zustand des Pedals (6) wenigstens teilweise umschließt.

8. Pedalwegsimulator nach Anspruch 1, **dadurch gekennzeichnet, daß** die Magnete Elektromagnete sind.

9. Pedalwegsimulator nach einem der Ansprüche 1 bis 8, **dadurch gekennzeichnet, daß** an einem die Magnete (10, 20) aufnehmenden Gehäuse (5) Sensoren (30) zur Erfassung der Pedalstellung vorgesehen sind.

## Claims

1. Pedal travel simulator, in particular brake pedal travel simulator, having a restoring means which exerts a restoring force with a progressive force/travel characteristic curve on a pedal (6), **characterized in that** the restoring means comprises at least two magnets (10, 20) whose poles which repel one another are arranged facing one another, and one of which is connected to the pedal (6) and is guided so as to be displaceable in the direction of the resulting repelling magnetic force.

2. Pedal travel simulator according to Claim 1, **characterized in that** the magnets (10, 20) are ferromagnetic permanent magnets.

3. Pedal travel simulator according to Claim 2, **characterized in that** the permanent magnets are magnetic discs and are each arranged in a pot (12, 22) made of a soft magnetic material.

4. Pedal travel simulator according to Claim 3, **characterized in that** a non-magnetic sleeve (14, 24) is arranged between the pot (12, 22) and each of the magnetic discs (10, 20).

5. Pedal travel simulator according to one of Claims 3 and 4, **characterized in that** the characteristic curve of the repelling magnetic force can be varied as a function of the pedal travel by shaping the pots.

6. Pedal travel simulator according to one of Claims 3 to 5, **characterized in that** the pot which faces away from the pedal is of a conical shape with a cone angle (α) which opens on the side facing away from the pedal.

7. Pedal travel simulator according to one of Claims 3 to 6, **characterized in that** in the fully depressed state of the pedal (6) the pot (12) which faces away from the pedal (6) at least partially surrounds the pot (22) which faces the pedal (6).

8. Pedal travel simulator according to Claim 1, **characterized in that** the magnets are electromagnets.

9. Pedal travel simulator according to one of Claims 1 to 8, **characterized in that** sensors (30) for sensing the pedal position are provided on a housing (5) which accommodates the magnets (10, 20).

## Revendications

1. Simulateur de course de pédale, en particulier de pédale de frein, comprenant un moyen de rappel qui exerce sur la pédale (6) une force de rappel suivant une courbe force/course,
**caractérisé en ce que**
le moyen de rappel comprend au moins deux aimants (10, 20) dont les pôles réciproquement répulsifs sont disposés l'un en face de l'autre et dont un est relié à la pédale (6) et guidé en déplacement en direction de la force magnétique répulsive résultante.

2. Simulateur de course de pédale selon la revendication 1,
**caractérisé en ce que**
les aimants (10, 20) sont des aimants permanents ferromagnétiques.

3. Simulateur de course de pédale selon la revendication 2,
**caractérisé en ce que**
les aimants permanents sont des disques magnétiques disposés respectivement dans un pot (12, 22) en matériau magnétique doux.

4. Simulateur de course de pédale selon la revendication 3,
**caractérisé en ce qu'**
un manchon (14, 24) amagnétique est disposé entre le pot (12, 22) et les disques magnétiques (10, 20).

5. Simulateur de course de pédale selon l'une quelconque des revendications 3 ou 4,
**caractérisé en ce que**
la courbe de la force magnétique répulsive varie en fonction de la course de pédale par une configuration des pots.

6. Simulateur de course de pédale selon l'une quelconque des revendications 3 à 5,
**caractérisé en ce que**
le pot opposé à la pédale présente une forme conique avec un angle de cône (α) s'ouvrant vers la face opposée à la pédale.

7. Simulateur de course de pédale selon l'une quelconque des revendications 3 à 6,
**caractérisé en ce qu'**
à l'état enfoncé de la pédale (6) le pot (12) opposé à la pédale (6) entoure du moins partiellement le pot (22) situé en face de la pédale (6).

8. Simulateur de course de pédale selon la revendication 1,
**caractérisé en ce que**
les aimants sont des électro-aimants.

9. Simulateur de course de pédale selon l'une quelconque des revendications 1 à 8,
**caractérisé en ce qu'**
un boîtier (5) logeant les aimants (10. 20) comporte des capteurs (30) pour détecter la position de la pédale.
